(19) Europäisches Patentamt
European Patent Office
Office européen des brevets

(11) **EP 3 968 098 A1**

(12) **DEMANDE DE BREVET EUROPEEN**

(43) Date de publication:
**16.03.2022 Bulletin 2022/11**

(21) Numéro de dépôt: **20195335.3**

(22) Date de dépôt: **09.09.2020**

(51) Classification Internationale des Brevets (IPC):
**G04B 19/12** (2006.01)    **G04B 37/22** (2006.01)
**G04B 45/00** (2006.01)    **C22C 1/05** (2006.01)
**C22C 29/00** (2006.01)    **C22C 29/16** (2006.01)

(52) Classification Coopérative des Brevets (CPC):
(C-Sets disponibles)
**G04B 37/22; C22C 29/005; C22C 29/16;**
B22F 2998/10; C22C 1/053                    (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **The Swatch Group Research and Development Ltd**
**2074 Marin (CH)**

(72) Inventeurs:
• **BERTHEVILLE, M. Bernard**
**1950 Sion (CH)**
• **FALLET, M. Yann**
**2065 Savagnier (CH)**

(74) Mandataire: **ICB SA**
**Faubourg de l'Hôpital, 3**
**2001 Neuchâtel (CH)**

(54) **ARTICLE DECORATIF EN CERMET**

(57)    L'invention concerne un article décoratif réalisé dans un matériau cermet comportant en poids entre 70 et 97% d'une phase céramique et entre 3 et 30% d'une phase d'un liant métallique, le liant métallique comprenant au moins un élément ou son alliage choisi parmi la liste constituée du ruthénium, du rhodium, du palladium, de l'osmium, de l'iridium, du platine, de l'or et de l'argent, la phase céramique comportant une phase de nitrures et optionnellement une phase d'oxydes et/ou d'oxynitrures, ladite phase de nitrures étant présente, par rapport au poids total du matériau cermet, dans un pourcentage compris entre 70 et 97% et ladite phase d'oxydes et/ou d'oxynitrures dans un pourcentage compris entre 0 et 15%.

La présente invention se rapporte également au procédé mis en œuvre pour réaliser cet article.

Fig. 1

(52) Classification Coopérative des Brevets (CPC):
(Cont.)

C-Sets
B22F 2998/10, B22F 1/10, B22F 2003/247,
B22F 2201/10, B22F 2201/02, B22F 3/1021,
B22F 3/225;
B22F 2998/10, B22F 1/10, B22F 2003/247,
B22F 2201/10, B22F 2201/02, B22F 3/1021,
B22F 2003/023

**Description**

DOMAINE TECHNIQUE

La présente invention se rapporte à un article décoratif et notamment à un composant d'habillage en horlogerie, réalisé dans un matériau de type cermet avec une phase céramique comprenant un nitrure et une phase métallique comprenant un métal précieux.

ART ANTERIEUR

Les cermets colorés à base de nitrures contiennent un liant métallique allergène comme le nickel ou le cobalt. Afin de réaliser des pièces pouvant être en contact avec la peau comme des boîtes de montre ou des bijoux, il est impératif de développer des compositions s'affranchissant de l'utilisation de liants comprenant ces éléments.

En outre, les cermets utilisés pour des applications spécifiques telles que les boîtes de montre doivent présenter une très bonne résistance aux rayures, c.à.d. une dureté supérieure à 1000 HV. Cela nécessite de réduire la quantité de liant métallique tout en contrôlant la mouillabilité entre le liant métallique et la phase céramique, une mauvaise mouillabilité se traduisant par une baisse de la densité sur le produit final et par là-même de la dureté. En particulier, réaliser un cermet coloré à base de TiN de teinte jaune, ne contenant pas de nickel et de cobalt et avec de bonnes propriétés finales par métallurgie des poudres et par frittage classique à l'état liquide est difficile. Ceci est dû principalement à la température de fusion très élevée du nitrure de titane qui est de 2930°C et à sa mauvaise mouillabilité avec des liants métalliques durant un frittage à l'état liquide. Il s'ensuit que le cermet présente à l'issue du frittage une porosité importante qui se traduit par une baisse de la dureté.

Hormis la dureté, les pourcentages entre les différentes phases doivent également être ajustés pour obtenir une bonne ténacité et la nuance de couleur souhaitée sur le produit final.

RESUME DE L'INVENTION

La présente invention a pour objet de pallier aux désavantages précités en proposant un cermet avec une composition optimisée pour remplir les critères suivants :

- s'affranchir de l'utilisation d'éléments allergènes tels que le nickel ou le cobalt,

- pouvoir être densifié par frittage en phase liquide, sous basse pression (frittage classique),

- avoir une dureté minimum de 500 HV30, de préférence minimum de 550 HV30 et plus préférentiellement minimum de 1000 HV30 pour une application nécessitant une très bonne résistance aux rayures, tout en ayant une ténacité suffisante avec, de préférence, un $K_ic$ supérieur ou égal à 2.8 MPa.m$^{1/2}$,

- présenter des nuances de couleurs allant du blanc au jaune marqué avec un éclat métallique élevé (65<L*≤80).

A cette fin, la présente invention propose un article décoratif réalisé dans un matériau cermet comportant en poids entre 70 et 97% d'une phase céramique et entre 3 et 30% d'une phase d'un liant métallique, le liant métallique comprenant au moins un élément ou son alliage choisi parmi la liste constituée du ruthénium, du rhodium, du palladium, de l'osmium, de l'iridium, du platine, de l'or et de l'argent, la phase céramique comportant une phase de nitrures et optionnellement une phase d'oxydes et/ou d'oxynitrures, ladite phase de nitrures étant présente par rapport au poids total du matériau cermet dans un pourcentage compris entre 70 et 97% et ladite phase d'oxydes et/ou d'oxynitrures dans un pourcentage compris entre 0 et 15%.

En particulier, pour la réalisation d'un cermet de couleur jaune à base de TiN par métallurgie des poudres et par frittage classique à l'état liquide, il est proposé d'ajouter un oxyde et/ou un oxynitrure qui permet d'améliorer la densification et d'augmenter la dureté.

Le matériau cermet ainsi développé présente après polissage un éclat métallique supérieur à celui des cermets utilisant comme liant métallique le nickel ou le cobalt et comparable à celui observé dans des aciers inoxydables (L*=75-80). Ces cermets précieux présentent des duretés qui peuvent monter jusqu'à 1250 HV30 et ils possèdent des ténacités suffisantes pour la réalisation de pièces d'habillage. En outre, ils peuvent être mis en forme par des procédés classiques de métallurgie des poudres tels que le pressage ou l'injection afin d'obtenir des pièces 3D "near-net shape".

D'autres caractéristiques et avantages de la présente invention apparaîtront dans la description suivante d'un mode de réalisation préféré, présenté à titre d'exemple non limitatif en référence aux dessins annexés.

BREVE DESCRIPTION DE LA FIGURE

La figure 1 représente une pièce d'horlogerie comprenant une carrure réalisée avec le matériau de type cermet selon l'invention.

La figure 2 représente une image en microscopie optique du matériau de type cermet selon l'invention avec une composition en poids de 92%TiN et 8%Pd.

La figure 3 représente une image en microscopie optique du matériau de type cermet selon l'invention avec une composition en poids de 84.6%TiN-9.4%ZrO$_2$ et 6%Pd.

DESCRIPTION DETAILLEE

La présente invention se rapporte à un article décoratif réalisé dans un matériau de type cermet comportant (étant constitué) en poids entre 70 et 97% d'une phase céramique et entre 3 et 30% d'une phase d'un liant métallique. Préférentiellement, le cermet comporte (est constitué) en poids entre 75 et 97% de la phase céramique et entre 3 et 25% de la phase d'un liant métallique. Plus préférentiellement, le cermet comporte (est constitué) en poids entre 78 et 96% de la phase céramique et entre 4 et 22% de la phase d'un liant métallique. Le liant métallique est choisi parmi la liste des éléments comprenant le ruthénium, le rhodium, le palladium, l'osmium, l'iridium, le platine, l'or et l'argent. Il peut également s'agir d'une combinaison de plusieurs desdits éléments ou d'un alliage d'un desdits éléments tel que, par exemple, l'Au-3N, l'Au-5N. La phase céramique comprend une phase de nitrures et optionnellement une phase d'oxydes et/ou d'oxynitrures. En d'autres mots, la phase céramique est constituée d'une phase de nitrures et optionnellement d'une phase d'oxydes et/ou d'oxynitrures. La phase d'oxydes et/ou d'oxynitrures a pour objet d'augmenter les propriétés mécaniques. Lorsqu'elle est présente, la phase d'oxydes et/ou d'oxynitrures est minoritaire par rapport à la phase de nitrures. Plus spécifiquement, par rapport au poids total du cermet, la phase de nitrures est présente dans un pourcentage compris entre 70 et 97% et la phase d'oxydes et/ou d'oxynitrures dans un pourcentage compris entre 0 et 15%. Les nitrures sont choisis parmi la liste non exhaustive comprenant les nitrures de Al, Ti, Si, Mn, Zr, Hf, Ta, Nb, V, Cr, Mo, W et B et une combinaison des nitrures de ces éléments. Les oxydes et oxynitrures sont choisis parmi la liste non exhaustive comprenant respectivement les oxydes et oxynitrures de Al, Ti, Si, Mn, Zr, Hf, Ta, Nb, V, Cr, Mo, W et B et une combinaison des oxydes et oxynitrures de ces éléments.

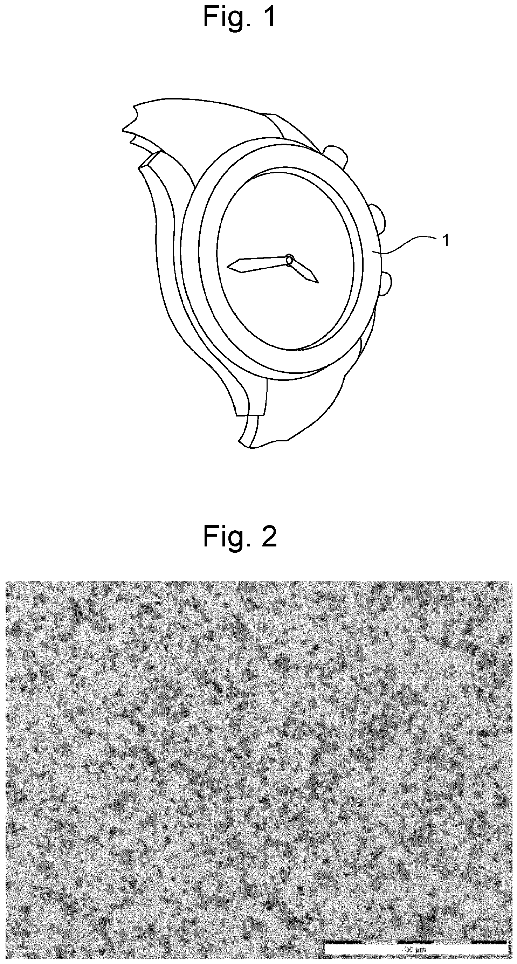

L'article décoratif peut être un élément constitutif de montres, bijoux, bracelets, etc. Dans le domaine horloger, cet article peut être une pièce d'habillage telle qu'une carrure, un fond, une lunette, un poussoir, un maillon de bracelet, un cadran, une aiguille, un index de cadran, etc. A titre illustratif, une carrure 1 réalisée avec le matériau de type cermet selon l'invention est représentée à la figure 1.

L'article en cermet est réalisé par frittage partant d'un mélange des poudres céramique et métallique. Le procédé de fabrication comporte les étapes consistant à:

a) Réaliser un mélange avec les différentes poudres et ce éventuellement en milieu humide. Les poudres de départ ont préférentiellement un d50 inférieur à 10 μm, et plus préférentiellement compris entre 2 et 5 μm. Le mélange peut éventuellement être réalisé dans un broyeur, ce qui réduit le d50 des particules de la poudre à une taille de l'ordre du micron, voire inférieure au micron après broyage. Ce mélange comporte en poids entre 70 et 97%, de préférence entre 75 et 97%, plus préférentiellement entre 78 et 96%, de la poudre céramique et entre 3 et 30%, de préférence entre 3 et 25%, plus préférentiellement entre 4 et 22% de la poudre métallique. La poudre céramique comporte des nitrures et optionnellement des oxydes et/ou des oxynitrures. Plus spécifiquement, par rapport au poids total de poudres, les nitrures sont présents dans un pourcentage compris entre 70 et 97%, de préférence entre 75 et 97%, plus préférentiellement entre 78 et 96%, et les oxydes et/ou oxynitrures dans un pourcentage compris entre 0 et 15%. Les nitrures sont choisis parmi la liste non exhaustive comprenant les nitrures de Al, Ti, Si, Mn, Zr, Hf, Ta, Nb, V, Cr, Mo, W et B et une combinaison des nitrures de ces éléments. Avantageusement, les nitrures sont choisis parmi les nitrures de Ti, Ta, Nb, Zr et une combinaison de ces nitrures. Les oxydes et oxynitrures sont choisis parmi la liste non exhaustive comprenant respectivement les oxydes et oxynitrures de Al, Ti, Si, Mn, Zr, Hf, Ta, Nb, V, Cr, Mo, W et B et une combinaison des oxydes et oxynitrures de ces éléments. Avantageusement, les oxydes et oxynitrures sont choisis parmi les oxydes et oxynitrures de Zr ou de Nb. La poudre métallique est choisie parmi la liste des éléments métalliques comprenant le ruthénium, le rhodium, le palladium, l'osmium, l'iridium, le platine, l'or, l'argent, une combinaison de plusieurs desdits éléments et un alliage d'un desdits éléments. Ainsi, préférentiellement, l'or est allié avec au moins un élément choisi parmi le Cu, Ag, Pd, C et N. Avantageusement, la poudre métallique comporte majoritairement du palladium, du platine, de l'argent ou de l'or allié avec du cuivre et/ou de l'argent. Elle peut, aux impuretés près, être constituée entièrement de platine, de palladium, d'argent ou d'or allié avec du cuivre et/ou de l'argent. A titre d'exemple, le mélange de poudres peut comporter en poids une des répartitions suivantes:

- entre 78 et 96% de TiN et entre 5 et 20% de Pd ou Pt,

- entre 80 et 90% de TiN et entre 10 et 20% d'Ag,

- entre 75 et 85% de TiN et entre 15 et 25% d'un alliage d'Au,

- entre 80 et 90% de NbN et entre 10 et 20% d'un alliage d'Au,

- entre 85 et 95% de NbN ou TaN et entre 5 et 15% de Pd ou Pt,

- entre 80 et 90% de TiN, entre 5 et 15% de $ZrO_2$, et entre 3 et 10% de Pd ou d'un alliage d'Au,

- entre 75 et 85% de TiN, entre 5 et 15% de ZrN, et entre 5 et 15% d'un alliage d'Au,

- entre 70 et 80% de NbN, entre 5 et 20% de $Nb_2O_5$, et entre 5 et 15% de Pt.

b) Eventuellement, un deuxième mélange comprenant le mélange précité et un système de liant organique (paraffine, polyéthylène, etc.) peut être réalisé.

c) Former une ébauche en conférant au mélange la forme de l'article désiré, par exemple, par injection (*Ceramic Injection Molding*) ou par pressage.

d) Fritter l'ébauche sous atmosphère inerte ou sous azote ou sous vide à une température comprise entre 1100 et 2100°C, de préférence entre 1400 et 1750°C, pendant une période comprise entre 30 minutes et 20 heures, de préférence entre 30 minutes et 2 heures. Cette étape peut être précédée d'une étape de déliantage dans une gamme de températures comprise entre 200 et 800°C si le mélange comporte un système de liants organiques.

L'ébauche ainsi obtenue est refroidie et polie. Elle peut également être usinée avant polissage pour obtenir l'article désiré.

L'article issu du procédé de fabrication comporte la phase céramique et la phase métallique dans des pourcentages en poids proches de ceux des poudres de départ. On ne peut cependant exclure des petites variations de compositions et de pourcentages entre les poudres de base et le matériau issu du frittage suite, par exemple, à des contaminations ou des transformations lors du frittage. Par exemple, des oxynitrures peuvent être formés in situ si la poudre de départ contient à la fois des nitrures et des oxydes d'un même élément. Les phases céramique et métallique sont réparties de manière homogène au sein du matériau cermet.

L'article a un espace colorimétrique CIELAB (conforme aux normes CIE n°15, ISO 7724/1, DIN 5033 Teil 7, ASTM E-1164) avec une composante de luminance L*, représentative de la manière dont le matériau réfléchit la lumière, de minimum 60, de préférence de minimum 65 et plus préférentiellement de minimum 75. Les variations de couleurs vont du blanc correspondant à la couleur acier à une couleur légèrement teintée jaune vers une couleur fortement jaune. Plus précisément, pour un article de couleur blanche, la composante a* est comprise entre -3 et +3 et la composante b* est comprise entre -3 et +3. Pour une couleur entre le blanc et le jaune, la composante a* est comprise entre 0 et +3 et la composante b* entre 0 et +10. Pour une couleur jaune, la composante a* est comprise entre 0 et +5 et la composante b* entre +20 et +30.

Le matériau céramique a une dureté Vickers mesurée sous charge de 30kg (HV30) comprise entre 500 et 1300, de préférence entre 550 et 1250, en fonction des types et des pourcentages des constituants. Avantageusement, il a une dureté supérieure à 1000 Vickers pour les pièces d'habillage nécessitant une résistance très élevée aux rayures. Il a une ténacité $K_{i}c$ de minimum 2 MPa.m$^{1/2}$, préférentiellement de minimum 2.8 MPa.m$^{1/2}$, la ténacité étant déterminée sur base des mesures des longueurs des fissures aux quatre extrémités des diagonales de l'empreinte de dureté selon la formule :

$$K_{1C} = 0.0319 \frac{P}{al^{1/2}}$$

avec P qui est la charge appliquée (N), a qui est la demi-diagonale (m) et *l* qui est la longueur de la fissure mesurée (m).

Le tableau 1 ci-après reprend différents exemples de cermets selon l'invention. Les valeurs en italique et gras remplissent les critères pour une dureté supérieure à 1000 Vickers, une ténacité supérieure à 2.8 MPa.m$^{1/2}$, un indice L* supérieur à 75 ou un indice b* supérieur à 25 pour une couleur très jaune.

13 mélanges de poudres de compositions distinctes ont été préparés dans un broyeur en présence d'un solvant. Les mélanges ont été réalisés sans ajouts de liants organiques. Après séchage, ils ont été mis en forme par pression uniaxiale et frittés soit sous vide, soit sous pression partielle dynamique de 60 mbar d'argon ou d'azote et à une température qui est fonction de la composition des poudres. Après frittage, les échantillons ont été polis plans afin de mesurer précisément les propriétés mécaniques et les indices de colorimétrie.

Des mesures de dureté HV$_{30}$ ont été réalisées en surface des échantillons et la ténacité a été déterminée sur base des mesures de duretés comme décrit précédemment.

Les valeurs colorimétriques Lab ont été mesurées sur les échantillons polis avec un spectrophotomètre KONICA MINOLTA CM-5 dans les conditions suivantes : mesures SCI (réflexion spéculaire incluse) et SCE (réflexion spéculaire exclue), inclinaison de 8°, zone de mesure MAV de 8 mm de diamètre.

Il ressort de ces essais que des duretés supérieures à 1000 Vickers sont obtenues pour les compositions avec 84.6%TiN-9.4%ZrO$_2$-6%Pd (essai N°3), 89.5%NbN-10.5%Pd (essai N°4), 89.5%TaN-10.5%Pd (essai N°5), 85%TiN-15%Pt (essai N°6), 75%NbN-15%Nb$_2$O$_5$-10%Pt (essai N°8), 84.6%TiN-9.4%ZrO$_2$-6%Au3N (essai N°9), 86%NbN-10.5%Au-3.5%Cu (essai N°12). Ces mêmes compositions présentent une ténacité supérieure à 3.3 MPa.M$^{1/2}$.

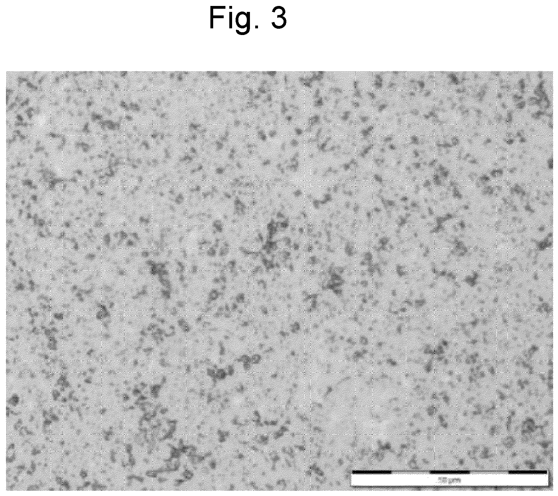

En particulier, en comparant les essais N°2 (92%TiN, 8%Pd) et N°3 (84.6%TiN-9.4%ZrO$_2$-6%Pd), on observe une nette augmentation de la dureté de 590 à 1050 Vickers, lorsqu'un oxyde, dans l'exemple ZrO$_2$, est ajouté. L'oxyde permet d'améliorer la densification et agit comme renfort pour augmenter les propriétés mécaniques. A la figure 3, on observe la réduction de la porosité (points foncés) lorsque l'oxyde est ajouté pour l'échantillon N°3 comparé à l'échantillon N°2 de la figure 2. Ainsi, la dureté est presque doublée sans impacter significativement la ténacité. De même, en comparant les essais N°7 et N°8, on observe une augmentation de la dureté et de la ténacité avec l'ajout de Nb$_2$O$_5$.

En outre, la nuance avec du NbN et de l'or allié (essai N°12) permet de combiner des valeurs de duretés supérieures à 1000 Vickers, avec une ténacité supérieure à 4.5 MPa.m$^{1/2}$ et une valeur de luminance L* proche de 80, soit identique à la luminance mesurée dans sur des aciers inox polis.

Lorsque le platine dans l'échantillon N°6 est utilisé comme liant en lieu et place du palladium de l'échantillon N°1, on observe sur ces nuances comportant 85% de TiN, une augmentation de la dureté qui atteint la valeur maximum de 1192 Vickers.

| N° | Composition (pds) | | Granulo. | Frittage | | Propriétés mécaniques | | | | |
|---|---|---|---|---|---|---|---|---|---|---|
| | Nitrure / Oxyde | Liant | d50 (μm) | T(°C) | tps (min) | HV30 | $K1C$ (MPa.m½) | $L*$ | $a*$ | $b*$ |
| (1) | 85% TiN | 15% Pd | 0.63 | 1450 | 90 | 657 | 3.6 | 75.0 | 3.39 | 24.33 |
| | | | | 1500 | 90 | 701 | 2.8 | 73.1 | 3.07 | 23.92 |
| | | | | 1600 | 90 | 863 | 4.2 | 74.5 | 1.17 | 25.31 |
| (2) | 92% TiN | 8% Pd | 0.67 | 1600 | 90 | 590 | 4.9 | 69.27 | 2.07 | 27.29 |
| (3) | 84.6% TiN - 9.4%$ZrO_2$ | 6% Pd | 0.87 | 1600 | 90 | 1050 | 4.2 | 72.43 | 1.59 | 25.66 |
| | | | | 1650 | 90 | 1187 | 3.6 | 72.94 | 1.48 | 26.00 |
| (4) | 89.5% NbN | 10.5% Pd | 0.93 | 1550 | 60 | 1191 | 4.5 | 78.91 | 0.76 | 5.90 |
| | | | | 1600 | 90 | 1408 | 3.3 | 77.38 | 0.37 | 4.32 |
| (5) | 89.5% TaN | 10.5% Pd | 1.18 | 1550 | 60 | 1186 | 6.6 | 70.54 | 0.55 | -0.36 |
| | | | | 1600 | 90 | 1174 | 5.7 | 70.43 | 0.38 | 0.87 |
| (6) | 85% TiN | 15% Pt | 0.62 | 1600 | 45 | 1143 | 4.6 | 72.88 | 3.19 | 24.95 |
| | | | | 1700 | 35 | 1192 | 6.5 | 72.14 | 2.77 | 23.80 |
| (7) | 89.1% NbN | 10.9% Pt | 0.97 | 1600 | 90 | 909 | 1.4 | 76.60 | 0.49 | 5.64 |
| (8) | 75% NbN - 15%$Nb_2O_5$ | 10% Pt | 0.60 | 1600 | 90 | 1068 | 3.9 | 72.85 | 0.53 | 4.12 |
| (9) | 84.6% TiN - 9.4%$ZrO_2$ | 6% Au-3N* | 0.83 | 1550 | 60 | 1066 | 3.6 | 72.07 | 1.43 | 25.37 |
| | | | | 1600 | 90 | 1189 | 4.5 | 71.68 | 1.68 | 26.23 |
| (10) | 80% TiN | 15%Au-5%Cu | 1.04 | 1500 | 90 | 540 | 3.6 | 72.1 | 3.41 | 27.58 |
| | | | | 1600 | 90 | 723 | 5.0 | 72.8 | 3.09 | 26.85 |
| (11) | 80% TiN -10%ZrN | 7.5%Au-2.5%Cu | 0.80 | 1400 | 90 | 596 | 4.3 | 65.0 | 7.77 | 22.28 |
| | | | | 1450 | 90 | 631 | 3.9 | 65.5 | 7.44 | 22.49 |
| | | | | 1500 | 90 | 729 | 3.8 | 68.0 | 6.59 | 23.51 |
| (12) | 86% NbN | 10.5%Au-3.5%Cu | 0.81 | 1400 | 90 | 1042 | 6.5 | 79.7 | 1.03 | 5.70 |
| | | | | 1450 | 90 | 1100 | 6.8 | 79.8 | 1.00 | 5.79 |
| | | | | 1500 | 90 | 1224 | 4.7 | 78.7 | 0.80 | 5.21 |

(suite)

| N° | Composition (pds) | | Granulo. | Frittage | | Propriétés mécaniques | | | | |
|---|---|---|---|---|---|---|---|---|---|---|
| | Nitrure / Oxyde | Liant | d50 ($\mu$m) | T(°C) | tps (min) | HV30 | K1C (MPa.m½) | L* | a* | b* |
| (13) | 85% TiN | 15% Ag | 0.80 | 1500 | 90 | 678 | 2.8 | 69.7 | 4.39 | 28.49 |
| *Au-3N : 75%Au-12.5%Ag-12.5%Cu+additifs Tableau 1 | | | | | | | | | | |

**Revendications**

1. Article décoratif réalisé dans un matériau cermet comportant en poids entre 70 et 97% d'une phase céramique et entre 3 et 30% d'une phase d'un liant métallique, le liant métallique comprenant au moins un élément ou son alliage choisi parmi la liste constituée du ruthénium, du rhodium, du palladium, de l'osmium, de l'iridium, du platine, de l'or et de l'argent, la phase céramique comportant une phase de nitrures et optionnellement une phase d'oxydes et/ou d'oxynitrures, ladite phase de nitrures étant présente par rapport au poids total du matériau cermet dans un pourcentage compris entre 70 et 97% et ladite phase d'oxydes et/ou d'oxynitrures dans un pourcentage compris entre 0 et 15%.

2. Article selon la revendication 1, **caractérisé en ce que** la phase du liant métallique est présente dans un pourcentage en poids compris entre 3 et 25% et **en ce que** la phase céramique est présente dans un pourcentage en poids compris entre 75 et 97%, ladite phase de nitrures étant présente par rapport au poids total du matériau cermet dans un pourcentage compris entre 75 et 97% et ladite phase d'oxydes et/ou d'oxynitrures dans un pourcentage compris entre 0 et 15%.

3. Article selon la revendication 1 ou 2, **caractérisé en ce que** la phase du liant métallique est présente dans un pourcentage en poids compris entre 4 et 22% et **en ce que** la phase céramique est présente dans un pourcentage en poids compris entre 78 et 96%, ladite phase de nitrures étant présente par rapport au poids total du matériau cermet dans un pourcentage compris entre 78 et 96% et ladite phase d'oxydes et/ou d'oxynitrures dans un pourcentage compris entre 0 et 15%.

4. Article selon l'une quelconque des revendications précédentes, **caractérisé en ce que** la phase de nitrures comporte un ou plusieurs nitrures choisis parmi la liste des nitrures de Al, Ti, Si, Mn, Zr, Hf, Ta, Nb, V, Cr, Mo, W et B.

5. Article selon la revendication 4, **caractérisé en ce que** les nitrures sont choisis parmi les nitrures de Al, Si, Ti, Ta, Nb et Zr.

6. Article selon l'une quelconque des revendications précédentes, **caractérisé en ce que** les oxydes et oxynitrures sont choisis parmi la liste comprenant respectivement les oxydes et oxynitrures de Al, Ti, Si, Mn, Zr, Hf, Ta, Nb, V, Cr, Mo, W et B et une combinaison des oxydes et oxynitrures de ces éléments.

7. Article selon la revendication 6, **caractérisé en ce que** les oxydes et oxynitrures sont choisis parmi les oxydes et oxynitrures de Al, Si, Ti, Ta, Nb et Zr.

8. Article selon la revendication 7, **caractérisé en ce que** la phase céramique est constituée d'une phase de nitrures de Ti et d'une phase d'oxydes de Zr.

9. Article selon la revendication 7, **caractérisé en ce que** la phase céramique est constituée d'une phase de nitrures de Nb et d'une phase d'oxydes de Nb.

10. Article selon l'une quelconque des revendications précédentes, **caractérisé en ce que** la phase du liant métallique est constituée, aux impuretés près, du palladium, du platine, de l'argent ou de l'or allié.

11. Article selon l'une quelconque des revendications précédentes, **caractérisé en ce que** la phase du liant métallique comporte un alliage d'or comprenant un ou plusieurs éléments choisis parmi le cuivre, l'argent, le palladium et l'azote.

12. Article selon l'une quelconque des revendications précédentes, **caractérisé en ce qu'**il a une dureté Vickers, $HV_{30}$, comprise entre 500 et 1300, de préférence entre 550 et 1250.

13. Article selon l'une quelconque des revendications précédentes, **caractérisé en ce qu'**il a une dureté Vickers, $HV_{30}$, supérieure à 1000 lorsque :

- la phase céramique comporte des nitrures de Ti et des oxydes de Zr et la phase du liant métallique comporte du Pd ou un alliage d'Au,
- la phase céramique comporte des nitrures de Ta ou de Nb et la phase du liant métallique comporte du Pd,
- la phase céramique comporte des nitrures de Ti et la phase du liant métallique comporte du Pt,
- la phase céramique comporte des nitrures de Nb, des oxydes de Nb et la phase du liant métallique comporte du Pt,
- la phase céramique comporte des nitrures de Nb et la phase du liant métallique comporte un alliage d'Au.

**14.** Article selon l'une quelconque des revendications précédentes, **caractérisé en ce qu'**il a une ténacité $K_{iC}$ supérieure ou égale à 2.8 MPa.m$^{1/2}$.

**15.** Article selon l'une quelconque des revendications précédentes, **caractérisé en ce qu'**il a, dans un espace colorimétrique CIELAB, une composante L* de minimum 60, de préférence de minimum 65 et plus préférentiellement de minimum 75.

**16.** Article selon l'une quelconque des revendications précédentes, **caractérisé en ce qu'**il est de couleur jaune et a, dans un espace colorimétrique CIELAB, une composante a* comprise entre 0 et +5 et une composante comprise entre +20 et +30.

**17.** Article selon l'une quelconque des revendications 1 à 15, **caractérisé en ce qu'**il est de couleur blanche et a, dans l'espace colorimétrique CIELAB, une composante a* comprise entre -3 et +3 et une composante comprise entre -3 et +3.

**18.** Article selon l'une quelconque des revendications 1 à 15, **caractérisé en ce qu'**il a une couleur entre le blanc et le jaune et a, dans l'espace colorimétrique CIELAB, une composante a* comprise entre 0 et +3 et une composante comprise entre 0 et +10.

**19.** Article selon l'une quelconque des revendications précédentes, **caractérisé en ce qu'**il s'agit d'un composant d'habillage en horlogerie choisi parmi la liste comprenant une carrure, un fond, une lunette, un poussoir, un maillon de bracelet, un cadran, une aiguille et un index de cadran.

**20.** Procédé de fabrication d'un article décoratif comprenant les étapes successives consistant à :

a) Réaliser un mélange avec une poudre céramique comprenant des nitrures et optionnellement des oxydes et/ou des oxynitrures et une poudre d'un liant métallique comprenant au moins un élément ou son alliage choisi parmi la liste constituée du ruthénium, du rhodium, du palladium, de l'osmium, de l'iridium, du platine, de l'or et de l'argent,
b) Former une ébauche en conférant audit mélange la forme de l'article,
c) Fritter l'ébauche à une température comprise entre 1100 et 2100°C, de préférence entre 1400 et 1750°C, pendant une période comprise entre 30 minutes et 20 heures, de préférence entre 30 minutes et 2 heures,

le procédé étant **caractérisé en ce que** la poudre céramique est présente dans un pourcentage en poids compris entre 70 et 97%, de préférence entre 75 et 97%, plus préférentiellement entre 78 et 96% et **en ce que** la poudre du liant métallique est présente dans un pourcentage en poids compris entre 3 et 30%, de préférence entre 3 et 25%, plus préférentiellement entre 4 et 22%.

**21.** Procédé selon la revendication 20, **caractérisé en ce que** le mélange de l'étape a) comporte une des répartitions suivantes :

- entre 78 et 96% de TiN et entre 4 et 22% de Pd ou Pt,
- entre 80 et 90% de TiN et entre 10 et 20% d'Ag,
- entre 75 et 85% de TiN et entre 15 et 25% d'un alliage d'Au,
- entre 80 et 90% de NbN et entre 10 et 20% d'un alliage d'Au,
- entre 85 et 95% de NbN ou TaN et entre 5 et 15% de Pd ou Pt,
- entre 80 et 90% de TiN, entre 5 et 15% de $ZrO_2$, et entre 3 et 10% de Pd ou d'un alliage d'Au,
- entre 75 et 85% de TiN, entre 5 et 15% de ZrN, et entre 5 et 15% d'un alliage d'Au,
- entre 70 et 80% de NbN, entre 5 et 20% de $Nb_2O_5$, et entre 5 et 15% de Pt.

**22.** Procédé selon la revendication 20 ou 21, **caractérisé en ce que** l'étape b) est réalisée par pressage ou injection.

# Fig. 1

# Fig. 2

# Fig. 3

Europäisches
Patentamt

European
Patent Office

Office européen
des brevets

**RAPPORT DE RECHERCHE EUROPEENNE**

Numéro de la demande

EP 20 19 5335

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 081 741 A (CHUGAI ELECTRIC IND CO LTD) 24 février 1982 (1982-02-24)<br>* Page 1; lignes 7-8 *<br>* Page 2; lignes 16-23; "Example 1-2" *<br>----- | 1-22 | INV.<br>G04B19/12<br>G04B37/22<br>G04B45/00<br>C22C1/05<br>C22C29/00<br>C22C29/16 |
| | | | DOMAINES TECHNIQUES RECHERCHES (IPC)<br><br>G04B<br>G04F<br>C22C |

Le présent rapport a été établi pour toutes les revendications

| Lieu de la recherche | Date d'achèvement de la recherche | Examinateur |
|---|---|---|
| La Haye | 26 janvier 2021 | Momeni, Mohammad |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 20 19 5335

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-2021

| Document brevet cité au rapport de recherche | Date de publication | Membre(s) de la famille de brevet(s) | Date de publication |
|---|---|---|---|
| GB 2081741 A | 24-02-1982 | BR 8104711 A | 06-04-1982 |
| | | CH 651321 A5 | 13-09-1985 |
| | | DE 3128997 A1 | 13-05-1982 |
| | | FR 2487380 A1 | 29-01-1982 |
| | | GB 2081741 A | 24-02-1982 |
| | | IT 1142021 B | 08-10-1986 |
| | | JP S622622 B2 | 21-01-1987 |
| | | JP S5726136 A | 12-02-1982 |

EPO FORM P0460

Pour tout renseignement concernant cette annexe : voir Journal Officiel de l'Office européen des brevets, No.12/82